# EUROPEAN PATENT APPLICATION

(11) **EP 1 933 170 A1**
(43) Date of publication of application: **18.06.2008**
(21) Application number: 06025301.0
(22) Date of filing: 07.12.2006
(51) Int. Cl.: G01T 1/29, G01N 23/223

(54) **Method and system for computed tomography using transmission and fluorescence measurements**

(71) Applicant: Universiteit Gent, 9000 Gent (BE)
(72) Inventor: Masschale, Bert, B-8956 Kemmel (Heuveland) (BE); Dierick, Manuel, B-9810 Nazareth (BE); Vlassenbroeck, Jelle, B-9000 Gent (BE)
(74) Representative: Bird, William Edward

(57) **Abstract**

A computed tomography system (100, 200) and method for imaging a sample (104) is described. The system typically comprises an X-ray radiation source (102) for irradiating the sample (104) with an X-ray beam, an image detection means (106) for detecting a portion of the X-ray beam transmitted through the sample (104) as to obtain a computed tomography image of an internal structure of the sample (104) and an X-ray fluorescence detection means (108) for obtaining a chemical characteristic of said internal structure of the sample (104). The invention also relates to processing of combined fluorescence and transmitted X-ray signals to obtain a computed tomography image and a chemical characteristic of the internal structure of the sample (104).

## Description

### Technical field of the invention

The present invention relates to the field of imaging techniques. More particularly, the present invention relates to systems and methods for imaging the internal structure of a sample based on computed tomography as well as to the images so produced.

### Background of the invention

Computed tomography (CT), also known as computed axial tomography (CAT), is a widely used imaging technique for imaging objects or living creatures. The imaging technique is a non-destructive technique allowing to represent the inner structure of samples. Typically it provides a computed three dimensional image based on sliced X-ray images of the sample under study. The latter typically is obtained using X-ray projections of the object obtained with a two dimensional pixel detector while rotating the sample, e.g. while performing a full rotation. With dedicated software it is then possible to reconstruct the X-ray attenuation parameter, thus providing an image of the internal structure. The attenuation parameter, also referred to as p, thereby is a function of the chemical composition and density of the material in the internal structure. Amongst the numerous applications of CT scanning are material characterisation, medical applications, dental applications, automotive and space industry applications, electronic applications, biological applications and industrial applications.

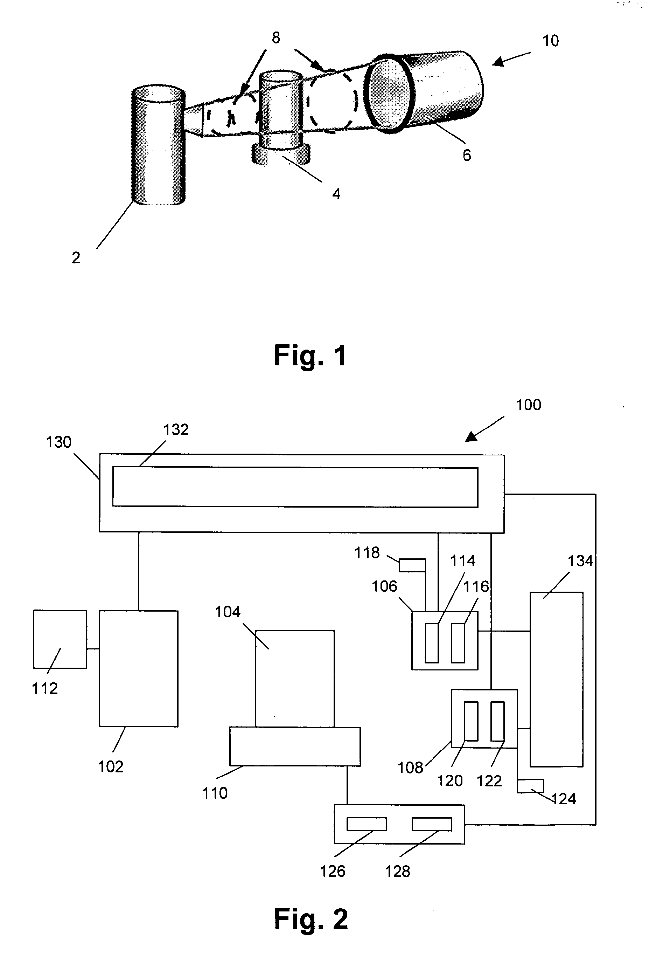

Besides the vast research systems relying on X-ray beams stemming from synchrotron facilities, often more compact systems based on standard X-ray sources such as X-ray tubes are used, e.g. in hospitals or labs. A schematic representation of a setup is shown in Fig. 1, showing a computed tomography system 10 with an X-ray source 2, a sample to be studied 4 and an imaging detector 6, the X-ray source generating an X-ray radiation beam 8. There is a constant evolution towards a higher spatial resolution of the resulting cross-sections through the objects. Recently, X-ray tubes with focal spots below one micron have become commercially available, resulting in micro-CT scan systems and even nano-CT scan systems. X-ray sources allowing this high resolution typically result in X-ray beams of low power, thus resulting in the requirement for very efficient X-ray detectors. Such detectors very often do not allow to sufficiently distinguish different energies of the X-ray beams tranmitted through the sample. As a consequence chemical characterisation based on the energy of the detected elements typically is not possible or may be inaccurate.

A number of CT techniques have been described wherein different materials in a sample are distinguished. One known method is the separation of different types of materials based on the computed degree of absorption, i.e. based on the computed attenuation parameter, of the transmitted X-rays in the sample. The computed tomography image typically is built up of a large number of pixels, whereby the intensity of the x-ray beam at one position of the sample imaged is represented by the intensity of the pixel, also referred to as the computed tomography number of the pixel. The latter typically is expressed in Hounsfield units. By selecting only a range of computed tomography numbers to be displayed, i.e. by windowing, an improved contrast between different materials in the sample can be obtained, allowing distinguishing between such different materials. Whereas the latter technique may allows to distinguish between different materials, typically no identification of materials can be obtained without prior knowledge of the materials present in the sample. It furthermore is to be noticed that no difference can be made between the presence of a different chemical element or the presence of a different density of the material. A system as described above is e.g. illustrated in US Patent 5,943,388, describing a system for performing a CT image wherein transmitted X-ray beams in different energy ranges are imaged in different colours, thus allowing to distinguish different types of materials present in the sample.

In US Patent 6,408,050 a method is described wherein energy dependent imaging is performed by setting an energy threshold level for a detector and by using X-ray photons having an energy above the energy threshold level for one image and using X-ray photons having an energy below the energy threshold level for a second image. The latter again allows to distinguish between different types of materials present in the sample under study, especially when the chemical composition of the sample is known in advance.

In international application WO 00/42826 an imaging system with high spatial resolution is provided by angulating an X-ray detector or X-ray detector array with respect to the X-ray radiation source. Typically, not only a higher spatial resolution is obtained, but the imaging system also provides for energy discriminating capabilities, allowing to study the absorption as function of different photon energy. The latter may assist in differentiating component tissues and other materials in the sample.

The above cited methods and systems are based on energy dependent detection of X-rays for generating CT images and thus on evaluation of absorption as function of photon energy. Typically, more accurate elemental characterisation may be needed.

### Summary of the invention

It is an object of the present invention to provide good systems and methods for performing computed tomography. The above objective is accomplished by a method and system according to the present invention.

The present invention relates to a computed tomography system for imaging a sample, the computed tomography system comprising an X-ray radiation source for irradiating the sample with an X-ray beam, an image detection means for detecting a portion of the X-ray beam transmitted through the sample as to obtain a computed tomography image of an internal structure of the sample and an X-ray fluorescence detection means for obtaining a chemical characteristic of said internal structure of the sample. It is an advantage of embodiments according to the present invention that compact CT systems can be provided for imaging and characterising samples that provide elemental information. Accordingly, the X-ray fluorescence detection means can be adapted to detect chemical characteristics of an element composition of the sample. The latter may e.g. allow to efficiently obtain information about the chemical composition of the material studied. It is an advantage of embodiments of the present invention that combined X-ray fluorescence measurements and computed tomography measurements can be performed, such that the sample internal structure and chemical composition of a sample can be obtained in a single high resolution CT scan. It is furthermore an advantage of embodiments according to the present invention that a combined chemical analysis and imaging of the sample internal structure can be obtained with an often non-destructive technique. It is an advantage of embodiments of the present invention that XRF spectral information may be obtained. It is also an advantage of some embodiments of the present invention that a quantification of the amount of particular chemical elements present in a sample may be determined.

The computed tomography system may be adapted for detecting a collimated X-ray fluorescence signal. It is an advantage of such embodiments according to the present invention that compact CT systems may be obtained wherein accurate chemical element information is obtained. The latter may e.g. be caused by applying an accurate chemical analysis technique, by performing the chemical analysis in the same system as the one generating the CT images and by using the same sample set-up, whilst also generating CT images. The collimation may allow to avoid interference between the CT imaging and the fluorescence measurement. The collimation may be obtained by a collimator. It furthermore may allow to generate appropriate information that can be combined with CT imaging information such that an accurate chemical characterisation of the internal structure of the sample can be performed. It is an advantage of particular embodiments of the present invention that efficient CT systems are obtained, which at the same time still are compact.

The computed tomography system may be adapted for operating the image detection means and the fluorescence detection means simultaneously, the fluorescence detection means being adapted to detect fluorescence from the sample generated by the X-ray radiation beam generated by the X-ray radiation source. It is an advantage of such embodiments according to the present invention that the number of system components needed for obtaining a CT image and a chemical characteristic of the internal structure of a sample can be limited. It is an advantage of such embodiments that efficient CT imaging with chemical characterisation can be performed as the fluorescence detection and tomography can be performed simultaneously. The latter also allows to reduce the amount of X-ray radiation to be administered to the sample and assists in increasing the accuracy as it allows better coupling between the obtained results.

The computed tomography system may further comprise a shielding device for shielding said X-ray fluorescence detection means from the X-ray radiation beam for irradiating the sample and/or from the transmitted X-rays.

It is an advantage of such embodiments according to the present invention that a substantially more accurate chemical analysis result may be obtained then without shielding device.

The fluorescence detection means may be positioned in a plane perpendicular to a rotation axis of the computed tomography system.

The rotation axis of the computed tomography system also may be referred to as the CT axis of the computed tomography system. Typically the rotation axis of the system may be the axis around which relative rotation of the sample with respect to the X-ray irradiation source may be performed. The rotation axis may be located between the X-ray source and the detector, e.g. in the middle between the X-ray source and the image detection means for detecting a portion of the X-ray beam transmitted through the sample as to obtain a computed tomography image of an internal structure of the sample. The exact position may define the magnification obtained. The X-ray fluorescence detector is preferably positioned such that no direct beam used for X-ray imaging can be detected, i.e. the position of the X-ray fluorescence detector is such that its field of view does not include the direct beam used for X-ray imaging.

The image detection means may be an energy selective detection means, allowing to selectively detect one or more particular X-ray energies or X-ray energy ranges.

It is an advantage of such embodiments of the present invention that substantial reduction of beam hardening effects may be obtained. It is also an advantage of such embodiments of the present invention that problems due to polychromatism of the X-ray beam may be reduced. The energy selective detection means may be a photon counting detection means. It also is an advantage of some embodiments according to the present invention that new types of low density materials can be imaged with a very high spatial resolution. It is furthermore an advantage of some embodiments of the present invention that a large dynamic range can be obtained.

The present invention also relates to a method for imaging an internal structure of a sample, the method comprising detecting X-ray signals transmitted through the sample, detecting X-ray fluorescence signals acquired during the detecting X-ray signals, and combining the detected X-ray signals and the detected X-ray fluorescence signals to obtain a computed tomography image and chemical characteristic of the internal structure of the sample. The method may both be applied to objects and to living creatures. The method furthermore may comprise collimating the X-ray fluorescence signals to be detected.

The method furthermore may comprise shielding a fluorescence detection means used for the detecting of the X-ray fluorescence signals. The sample may be a non-living object, the method further comprising irradiating the sample with an X-ray beam, wherein said X-ray beam both generates the X-ray signals transmitted through the sample and the X-ray fluorescence signals. It is an advantage of embodiments according to the present invention that efficient and accurate CT methods are obtained allowing to obtain a chemical characteristic of the internal structure of the sample.

Combining may comprise using a spectrum back projection technique for reconstructing a chemical characteristic of the internal structure of the sample. It is an advantage that a chemical characterisation mapping of the internal structure of a sample may be obtained.

Combining may comprise using an iterative spectrum matching technique for reconstructing a chemical characteristic of the internal structure of the sample. It is an advantage of such embodiments of the present invention that three dimensional chemical analysis mapping may be obtained using an iterative spectrum matching reconstruction technique.

The method furthermore may comprise deriving at least one particular chemical element present in the sample based on said detecting X-ray fluorescence signals, obtaining computed tomography images for X-ray energies above and below an absorption edge of the at least one particular chemical element for absorption of X-rays, and combining said computed tomography images for X-ray energies above and the computed tomography image for X-ray energies below the absorption edge to obtain an element specific computed tomography image of the sample. It is also an advantage of such embodiments of the present invention that chemical element specific high spatial resolution cross-sections through the sample can be obtained. In other words, it is an advantage of some embodiments of the present invention that chemical element specific CT scans can be obtained.

Detecting X-ray signals transmitted through the sample may comprise detecting X-ray signals for X-rays having substantially one particular X-ray energy. It is an advantage of such embodiments that problems caused by polychromatism of the X-ray beam, e.g. beam hardening problems can be at least reduced and possibly avoided.

The present invention also relates to a method for imaging an internal structure of a sample, the method comprising obtaining X-ray fluorescence signals from a sample, deriving at least one particular chemical element being present in the sample based on the obtained X-ray fluorescence signals, obtaining computed tomography images for X-ray energies above and below an absorption edge of the at least one particular chemical element for absorption of X-rays, and combining said computed tomography images for X-ray energies above and the computed tomography image for X-ray energies below the absorption edge to obtain an element specific computed tomography image of the sample.

The present invention also relates to a method for processing X-ray analysis information for characterisation of a sample, the method comprising receiving detected X-ray data from X-rays transmitted through the sample under study, receiving detected X-ray fluorescence data, detected simultaneously with the X-rays transmitted through the sample, and combining the detected X-ray data from transmitted X-rays and the detected X-ray fluorescence data to obtain a computed tomography image and a chemical characteristic of the internal structure of the sample under study. Receiving detected X-ray fluorescence data, detected simultaneously with the X-rays transmitted through the sample may be receiving detected X-ray fluorescence data generated by the same primary X-rays as the X-rays transmitted through the sample under study.

The present invention furthermore relates to a controller for use in an X-ray characterisation device as described above, the controller being adapted for synchronising the X-ray radiation source, the imaging detection means, the fluorescence detection means and a rotation means for providing a relative movement of the sample with respect to the X-ray radiation source.

The present invention also relates to a computing means for processing X-ray analysis information for characterisation of a sample, the computing means comprising an input means for receiving detected X-ray data from X-rays transmitted through the sample under study, and for receiving detected X-ray fluorescence data, detected simultaneously with the X-rays transmitted through the sample, and a processing means for combining the detected X-ray data from transmitted X-rays and the detected X-ray fluorescence data to obtain a computed tomography image and a chemical characteristic of the internal structure of the sample under study.

The present invention furthermore relates to a computer program product adapted for, when executed on a computing device, performing a method for imaging a sample as described above or a method for processing X-ray analysis information as described above.

The present invention also relates to a machine readable data storage device storing the computer program product as described above. The invention furthermore relates to a transmission of the computer program product over a local area telecommunications network.

The present invention also relates to digital or analog images produced using any of the methods as described above.

It is an advantage of embodiments according to the present invention that the time needed for measuring is not substantially increased compared to similar computed tomography (CT) scanning. It is an advantage of embodiments according to the present invention that discrimination between elements being adjacent in the periodic table of Mendeljev, can be easily separated. It is an advantage of embodiments according to the present invention that such systems allow distinguishing between density effects and absorption effects. Information about the density and absorption can be obtained separately, whereas often only the product of both is obtained.

It is an advantage of embodiments of the present invention that computed tomography imaging may be combined with accurate elemental characterization of the imaged sample. It is furthermore an advantage of embodiments of the present invention that computed tomography imaging with elemental characterization can be obtained using a compact system. It is also an advantage of embodiments of the present invention that efficient systems for obtaining computed tomography images in combination with elemental characterization of the sample is obtained. It is also an advantage that the latter may be performed simultaneously, i.e. within substantially the same time span needed for obtaining a computed tomography image.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 is a schematic illustration of a conventional computed tomography system, known from prior art.
Fig. 2 is an exemplary schematic block-diagram of a computed tomography system according to the first aspect of the present invention.
Fig. 3 is an exemplary illustration of a fluorescence detection means as can be used in a CT system according to the first aspect of the present invention.
Fig. 4 shows an exemplary schematic block-diagram of a computed tomography system with a shielded and collimated X-ray fluorescence detection system, according to the first particular embodiment of the first aspect of the present invention.
Fig. 5a and Fig. 5b illustrate contrast inverted CT images of the beam hardening effect that can be reduced using a CT-system according to a second particular example of a first aspect of the present invention, Fig. 5a illustrating an image with beam hardening reduction, Fig. 5b illustrating an image without beam hardening reduction.
Fig. 6 illustrates an exemplary flow diagram of a method for imaging an internal structure of a sample obtaining chemical characterisation, according to the second aspect of the present invention.
Fig. 7 illustrates an example of the information that may be obtained by combining detected transmitted X-ray signals and detected fluorescence signals, according to a method for imaging according to the second aspect of the present invention.
Fig. 8 illustrates an example of an element-specific CT image for the presence of uranium in a stone, as can be obtained using a method according to the third particular embodiment of the second aspect of the present invention.
Fig. 9a illustrates the characteristic absorption edges for X-rays of Fe and Ti, as can be used in a method according to the third particular embodiment of the second aspect of the present invention.
Fig. 9b shows from top to bottom a radiographic image for detected X-ray energies below the characteristic absorption edge of Ti, a radiographic image for detected X-ray energies above the characteristic absorption edge of Ti and the division of both radiographic images revealing the presence of titanium, as can be obtained using a method according to the third particular embodiment of the second aspect of the present invention.
Fig. 10 illustrates a computing device that is adapted for performing any of the methods as described in the present invention.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

The following terms are provided solely to aid in the understanding of the invention. These definitions should not be construed to have a scope less than understood by a person of ordinary skill in the art. With X-ray radiation, in the present application, ionising electromagnetic radiation produced by charged particles, such as e.g. electrons is meant, with an energy above 0.1 keV, up to several MeV. In particular embodiments, the energy of the X-rays may be between 0.1 keV and 1000keV, e.g. between 0.1keV and 100 keV. In practice, the lower limit may be determined by the energy of the X-rays required to penetrate the bulk of the sample. In preferred embodiments according to the present invention, the X-ray radiation used is within an energy range of 1 keV and 40 keV, corresponding with a wavelength range between 1.2nm and 0.031nm. The energy of the X-rays used may be selected such that characteristic K-lines of standard elements fall within this range and that, for heavy element, L-lines fall inside this energy range.

Furthermore, with X-ray fluorescence there is meant the physical reaction based on the following principle. An X-ray incident on an atom may cause ejection from electrons from the inner shells of the atom thus creating vacancies. The latter typically represents an unstable condition for the atom. Typically, when the atom returns to its stable condition, electrons from the outer shells may be transferred to the inner shell vacancies, resulting in characteristic X-rays whose energy correspond with differences between two binding energies of shells of the atom. The emitted characteristic fluorescence X-rays are characteristic for the atoms, and thus may be used in chemical element characterisation of a sample. Typically, the K and L shells of atoms may be involved in the X-ray fluorescence process.

With a micro-computed tomography system there is meant a system allowing to obtain a resolution within the range 1 milimeter to 1 micrometer, preferably maximally a few hundred micrometer to 1 micrometer. With a nano-computed tomography system there is meant a system allowing to obtain a resolution below 1 micrometer, i.e. down to the resolution that can be obtained using advanced state of the art components. A typical resolution for a system that is commercially available may be about 400nm, e.g. achieved by a skyscan 2011 nano-CT scanner. Nevertheless, specialised apparatus may be used with resolutions down to 50nm. A disadvantage in such systems may be that the field of view may be limited to about 20µm. X-ray tubes may be used with a small focal spot size. Today, systems are commercially available with a focal spot size down to 200nm. The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

In a first aspect, the present invention relates to a computed tomography (CT) system allowing to obtain both CT images and a chemical characteristic of the inner structure of the sample. In the present invention, the latter is obtained by providing a CT system, furthermore adapted for providing X-ray fluorescence results from the sample. Such a system is schematically illustrated in Fig. 2, showing standard and optional components of such a CT system. The CT system 100 typically comprises an X-ray radiation source 102, for irradiating a sample 104, an image detection means 106 for detecting the transmitted X-rays and a fluorescence detection means 108 for detecting an X-ray fluorescence response from the sample 104. Typically, the sample 104 may be positioned on a sample stage 110. The different components of the CT system 100 will, by way of example, further be discussed in more detail, the present invention not being limited thereby.

The X-ray radiation source 102 may be any suitable X-ray radiation source allowing to obtain a compact CT system. The X-ray radiation source 102 may e.g. be an X-ray radiation tube of well known conventional design, or a field emission X-ray radiation source. In the latter case, the field emission X-ray radiation source may be based on carbon nano-tube emitters. In the present invention, the X-ray radiation source 102 is not stemming from a synchrotron facility, as no compact system can be obtained using such an X-ray source. In a preferred embodiment of the present invention, the X-ray radiation source is an X-ray radiation source providing characteristic X-rays. Characteristic X-rays are X-rays produced by transition of electrons between atomic orbits.

Typically, the X-ray radiation source 102 may be adapted for generating an X-ray radiation beam having an X-ray photon energy between 0.1 keV and 100 keV, e.g. between 1 keV and 40 keV. The X-ray radiation source 102 may be adapted for generating a fan beam, although the invention is not limited thereto. The X-ray radiation source 102 used may be an X-ray source having a narrow focus point, e.g. with a diameter less than 10µm or e.g. with a diameter less than 1µm. The latter may be referred to as a nano-focus X-ray tube which is commercially available and allows to produce X-ray radiation emitted from a small focal point. In other words, the focal spot size of the X-ray radiation source 102, which determines the best spatial resolution obtainable, may be small, e.g. with a diameter less than 10µm or less than 1µm. Such X-ray radiation sources 102 are for example available from Hamamatsu, Feinfocus or Phoenix X-ray. Typically, the X-ray radiation source 102 may be an X-ray radiation tube being an open tube, meaning that the filament and the X-ray target can be changed by an operator and thus is relatively easily accessible. Typically, the X-ray radiation source 102 also may be provided with a cooling means 112 allowing cooling of the X-ray radiation source 102. Typically such an X-ray radiation source 102 may be watercooled, although other cooling means also may be provided. The thermal limitations of the X-ray radiation source 102, i.e. typically the thermal limitations to the power density in the X-ray target present in the X-ray radiation source 102, implies that the maximum current needs to be lower if the focal spot of the electron beam on the X-ray target is smaller. The latter results in a smaller X-ray flux. Preferably, in order to reach a small X-ray spot, e.g. an X-ray spot with a diameter smaller than 1µm, the energy of the electrons inside the X-ray tube should not be higher than 40 keV, limited by the electron scattering range in the target material. For example, in the case of a Feinfocus nano-focus tube the maximum target power is 1W in nano-focus mode, resulting in a beam diameter of about 0.9µm at 40keV. For µ-focus mode, wherein the beam diameter typically is larger than 1µm such as e.g. of the order of 3 or 4 micrometer at 40 keV the maximum power is 3W. Special diamond targets allow more power in microfocus mode. In nanofocus mode, the power typically may be limited by the filament, since the majority of the emitted electrons is lost in the optics, in tubes like from feinfocus. An X-ray tube with 300 nm focal spot size and maximum voltage of 80kV is available from Hamamatsu. The filament (LaB₆) typically is more complicated than the Feinfocus filament (W) and requires a high vacuum.

The imaging detection means 106 may be any suitable imaging detector for detecting X-rays such that detection for obtaining a computed tomography image can be performed. Typical imaging detection means 106 that may be used are flat panel detectors such as amorphous Si and CMOS flat panel detectors, image intensifiers, tapered CCD cameras, which typically are relatively efficient for the detection of visible light, in combination with a converter for converting X-rays into visible light, such as e.G. a scintillator. One example of a scintillator is a Gadox (P43) scintillator, available with ultra fine grain size for high resolution applications. Typically in order to transport the light from the scintillator to the actual detector surface, light guides may be used. For example, Csl needles grown on detectors may be used both as scintillator material and as light guides. Other examples of light guides may be FOPs or tapers. Alternatively, an imaging detection means 106 could be used that directly converts X-rays into electrons. An example thereof is an amorphous Selenium flat panel detector. Typically, in such detectors, X-rays are converted into hundreds of visible photons which fill up the dynamic range of the imaging detection means 106. A disadvantage of such detection means typically is production of noise due to the conversion mechanism. Additional noise is furthermore generated by the read noise and the dark current of the detection means. Especially flat panel detectors suffer from high dark current rates. In a preferred embodiment, the imaging detection means 106 is a photon counting detector, e.g. a photon counting solid state detector. The photon counting detector is an advantageous solution both for micro-CT scanners as well as nano-CT scanners. Typically in a photon counting detector, the or each of the detector elements can register individual photons. Typically, photon counting detectors suffer less from noise as only the statistical nature of X-rays will result in noise, whereas the second noise source introduced by the conversion of X-rays into visible tight is avoided. Typically photon counting pixel detectors may have for each pixel an own data acquisition and processing electronics, such as an amplifier, discriminator and/or counter. As typically a certain energy resolution is available for the photon counting detector, typically one can discriminate between X-ray signals and electronic noise and thus reduce or even eliminate noise.

The imaging detection means 106 typically may be pixelated. It may be a two-dimensional pixelated detection means. Preferably for each pixel, detection of the incoming X-rays is performed with a negligible dark current and read-out noise. The latter may e.g. be obtained using a photon counting pixelated detector, as described above. In order to discriminate the smallest density variation in the sample, the dynamic range for the detector element or for each of the detector pixels should be large, such as e.g. at least 12 bit, preferably at least 14 bit, even more preferably at least 16 bit, the invention not being limited thereto. In preferred embodiments, the amount of detector elements is large, e.g. such as in a 1024 x 1024 pixelated detector although other pixel configurations and another total number of pixels also can be used. Typically the pixel size and the read-out time of the imaging detection means 106 may be subject to less stringent requirements, as the X-ray flux typically may be in the order of 10000 photons/s but can be decreased or increased according to the specifications of the imaging detection means 106. Nevertheless, a short read-out time may increase the overall dynamic range of the detector. The energy sensitivity of the detector preferably is as constant as possible over the entire energy spectrum of the X-ray radiation used. The imaging detection means 106 may be positioned on a moveable stage in order to increase the field of view (not shown in Fig. 2). The imaging detection means 106 typically may comprise a detection sensitive area 114, read-out circuitry 116 for the detected signal and may possibly also be cooled, using a cooling means 118.

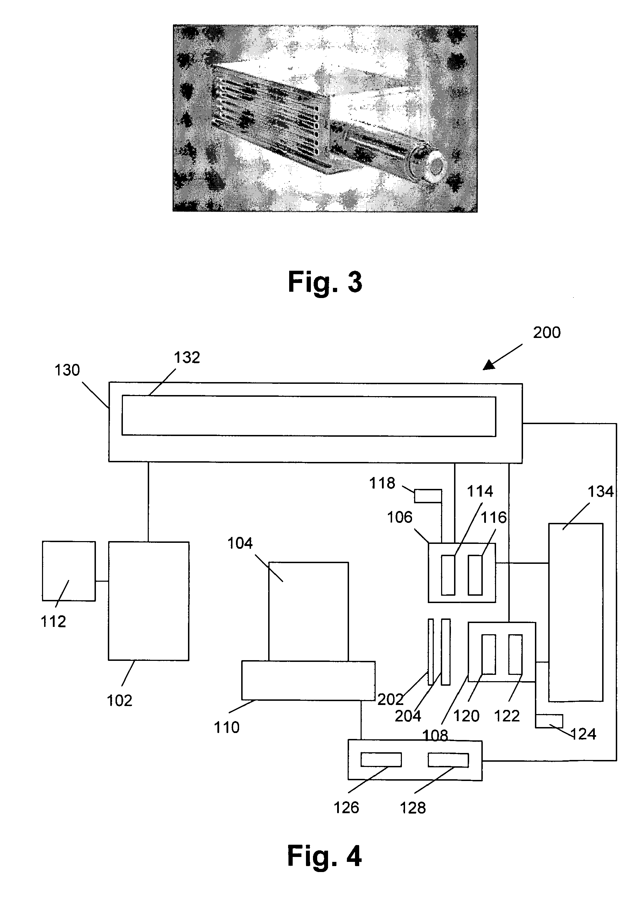

The CT-system 100 according to the present aspect furthermore comprises a fluorescence detection means 108 for detecting X-ray fluorescence (XRF) from the sample 104. Such a fluorescence detection means 108, e.g. XRF detector, may be any suitable detector, such as e.g. an X-PIPS detector as available from Canberra Inc., the invention not being limited thereto. By way of illustration, a fluorescence detection means 108 that can be used in a CT system according to the present invention is shown in Fig. 3. The fluorescence detection means 108 thus typically may allow X-ray fluorescence analysis of the sample 104 simultaneously with the obtaining CT image information from the sample 104, thus resulting in information about the chemical composition. The fluorescence detection means 108 typically may be adapted for detecting fluorescence signals generated by the same primary X-rays as the once detected for the CT imaging. The fluorescence detection means 108 may comprise a detection sensitive area 120 and read-out circuitry 122 for the detected signal. The fluorescence detection means 108 may also be cooled with a cooling means 124, e.g. by water cooling, gas cooling or peltier cooling and may have low noise levels. Typically, the fluorescence detection means 108 may be sensitive in a wide energy range, e.g. at least in a range between 1 keV and 40 keV, e.g. in a range between 2 keV and 30 keV, although the invention is not limited thereto. The fluorescence detection means 108 preferably is positioned in a plane perpendicular to the rotation axis, also referred to as the CT axis. The fluorescence detection means 108 preferably is positioned as close as possible to the sample 104, in order to efficiently detect fluorescence radiation from the sample 104. The distance between the detector and the sample thereby may be defined as the distance between the CT rotation axis and the part of the X-ray detector closest to the sample. The distance can be varied arbitrarily starting from the radius of the sample to larger distances. For example, the additional distance larger than the radius of the sample may be between 1 mm and 10cm, preferably between 2mm and 5cm. A larger distance means a larger field of view but also less XRF X-rays per solid angle. Therefore one has to make a compromise between a large field of view and a large XRF flux. In a preferred embodiment, the XRF detector is positioned as close as possible to the sample, whereby the diameter of the pinhole in the shielding means is adjusted to match the geometry to the sample size. The fluorescence detection means 108 may be oriented at 90° with respect to the computed tomography imaging axis and the axis of rotation of the sample.

The fluorescence detection means 108 typically may be positioned outside the region defined by the X-ray spot and the outside the region of the imaging detection means 106, such that no interference occurs between the fluorescence detection means 108 and the imaging detection means 106. As will be described in more detail in a particular embodiment of the present invention, the fluorescence detection means 108 preferably is shielded, e.g. from direct X-rays coming from the X-ray radiation source 102 and may be adapted for detecting a collimated fluorescence beam. Typically, the fluorescence detection means 108 may allow to obtain XRF information as function of the CT rotation angle, resulting in two dimensionals and/or three dimensional XRF information about the sample. The fluorescence detection means 108 typically preferably is independent of the sample rotation, i.e. it does not follow the relative rotation of the sample. Furthermore, the fluorescence detection means 108 may be adapted for allowing making flat field images, i.e. for imaging without sample 104. The latter allows normalisation of the projection images. The latter may be obtained by fixing the XRF detection means 108 to the X-ray radiation source 102 and possibly also to the imaging detection means 106. These components may e.g. typically also be shiftable with respect to the sample 104. X-ray fluorescence information may be obtained from a fixed position with respect to the sample. X-ray fluorescence information also may be obtained from different positions, whereby actuators may be introduced for obtaining predetermined positions. In this way 3D chemical information can be directly obtained.

In one embodiment, the imaging detection means 106 and the X-ray fluorescence device may be one and the same device. The latter may for example be the case if the imaging detection means 106 is an energy sensitiv detector, such as e.g. an energy sensitive photon counting detector. The computed tomography system 100 may therefore be adapted with a beam selector, wherein for measurement of the X-ray fluorescence radiation a predetermined beam selection, e.g. different from the size and intensity of the beam used for imaging, is made. The predetermined beam selection may e.g. be selection of a part of the beam used for imaging. The beam selector may e.g. be a pinhole positioned in front of the imaging detection means 106. The latter has the advantage that 3D information can be obtained in a less complex way, e.g. without actuators. In a preferred embodiment, the energy resolution of the imaging detection means 106 is such that fluorescence from different elements can be distinguished based on their energy.

In a preferred embodiment according to the first aspect, the energy sensitivity of the different components, i.e. the X-ray radiation source 102, the X-ray imaging detection means 106 and the fluorescence detection means 108 typically are matched. The components may be sensitive in an energy range between 1 keV and 40 keV, e.g. between 2 keV and 30 keV. The latter makes the system of this preferred embodiment especially suitable for studying low density materials or small objects, such as e.g. biological samples, carbon samples, polymer samples, pharmaceutical samples, etc.

As described above, the system typically also may comprise a sample stage 110 for carrying the sample 104 to be studied. Typically such a sample stage 110 may comprise a rotation means 126 and an X-Y movement means 128, allowing both horizontal movement and rotation of the sample 104. Such an X-Y movement means 128 may be a piezo moveable stage, allowing small movements. The rotation means 126 typically may allow to relatively rotate the sample 104 with respect to the X-ray radiation source 102 and the imaging detection means 106 and possibly the fluorescence detection means 108. Such relative rotation is important as for CT imaging, images are needed over different rotation angles in order to obtain an image of the internal structure of the sample 104, i.e. in order to obtain an image of the internal structure of the sample. Alternatively, the X-ray radiation source 102 and the imaging detection means 106 and possibly the fluorescence detection means 108 may be rotated with respect to the sample, using another rotation means (not shown in Fig. 2). Furthermore, relative movement of the X-ray radiation source 102 and the imaging means 106, 108 may be obtained by combining rotation of the sample to be studied and rotation of the X-ray radiation source 102 and the imaging means 106, 108.

Typically, the CT system 100 also may comprise a controller 130 for controlling the X-ray radiation source 102, the imaging detection means 106, the fluorescence detection means 108 and the sample stage. The latter typically allows to activate the different components such that CT imaging may be performed and such that simultaneously detection of X-ray fluorescence is possible. The controller 130 therefore may comprise a synchronisation means 132. The controller may be part of the CT system 100 or may be external to it. A more detailed description of such a controller will be provided in the fourth aspect of the present invention.

The CT system 100 furthermore may comprise a processor 134 for processing the obtained detection signals from the imaging detection means 106 and from the fluorescence detection means 108. Typically the processing means may be adapted for separately handling generation of CT images from the detection signals from the imaging detection means 106 and for combining the detection signals from the imaging detection means 106 and the fluorescence detection means 108 in order to obtain a chemical characteristic, e.g. the chemical composition, of the inner structure of the sample under study. Processing the generation of CT images from the detection signals from the imaging detection means 106 may be performed in any suitable way for obtaining CT images, e.g. using filtered back projection reconstruction techniques or iterative techniques known from prior art. Processing combined fluorescence and CT input signals in order to obtain a chemical characteristic of CT images from the detection signals may be performed using dedicated algorithms, as will be described in more detail in the second aspect of the present invention. The processor 134 may be any suitable type of processing means having sufficient processing capabilities for performing the required processing of the detected signals.

Particular examples and illustrations of the first aspect will further be provided by way of particular embodiments, the present invention not being limited thereto, but only limited by the appended claims.

In a first particular embodiment of the first aspect, the present invention relates to a system for obtaining combined computed tomography images and chemical characterisation of the internal structure of a sample under study, whereby the system furthermore comprises a means for collimating the X-ray fluorescence beam detected by the fluorescence detection means 108 and/or a means for shielding the X-ray fluorescence detection means 108. The collimator for the X-ray fluorescence beam may assist in appropriate detection of the fluorescence signals. The shielding device may assist in further improving the quality of the detected spectrum since it reduces or further reduces the amount of direct radiation impinging on the X-ray fluorescence detection means 108. The shielding device may be for example a conical collimator positioned on the irradiation path after the X-ray source, e.g. adjacent thereto or without intermediate components between them. The latter is illustrated by way of example in Fig. 4, showing a schematic representation of components of an exemplary CT system 200 according to the present embodiment. Standard and optional components as described above for the first aspect are indicated using the same reference numerals as in Fig. 2. The CT-system 200 thus comprises a collimator 202 and/or shielding means 204 such that a collimated X-ray fluorescence beam is collected by the fluorescence detection means 108 and/or the fluorescence detection means 108 is further shielded from other X-ray radiation. Typically the collimator 202 and/or shielding device 204 may be made of any suitable material, such as for example but not limited to lead (Pb), ..... The material used may be a material with high density and having only few X-ray fluorescence lines in the energy range between 3 keV and 30 keV. The shielding and/or collimating material typically is selected in such a way that the X-ray fluorescence signal either does not reach the fluorescence detection means 108 or that the corresponding X-ray fluorescence radiation of the shielding and/or collimating material has an energy outside the typical energy range for detection of X-ray fluorescence of typical sample material or outside the energy range of the detector. Furthermore, the shielding and/or collimating material preferably is chemically very pure, such that no contamination fluorescence is detected by the fluorescence detector. The thickness of the shielding and/or collimating material required depends on the type of shielding and/or collimating material used. If e.g. lead is used, the thickness may be in the range between 3mm and 13mm, e.g. between 5mm and 10mm, e.g. of the order of 5mm. Lighter materials may result in a thicker collimator, e.g. larger than 5mm in the range 6mm and 10mm. The collimator may be made by providing holes in slabs or cylinders of the collimator material. Such a collimator may e.g. be a substantially cylindrical collimator being hollow and fitting over the X-ray fluorescence detection means. Thy cylindrical collimator further preferably comprises a hole, e.g. pinhole, for collimating the beam in a collimated beam impinging on the X-ray fluorescence detection means.

Surprisingly, using such collimator 202 and/or shielding device 204 allows to obtain substantially accurate fluorescence signals, allowing to obtain substantially accurate chemical element characterisation of the internal structure of the sample under study, while simultaneously obtaining computed tomography images of the sample 104.

In a further embodiment according to the first aspect, the present invention relates to a CT system 100, 200 as described above in the first aspect and/or in the first embodiment thereof, wherein the imaging detection means 106 of the CT system is an imaging detection means 106 comprising energy selection capabilities. Preferably, the imaging detection means 106 is a photon counting pixelated detector wherein energy selection is possible. A photon counting detector typically may allow selecting an energy window on the pixels. Only the X-rays with energy between E and E + ΔE emitted by the X-ray source are registered by the detector. In this way, for example instead of having a monochromatic source which typically is hard to obtain, a photon counting sensor can be used as monochromator resulting in an X-ray energy specific CT system. An imaging detection means 108 with energy selection capabilities may comprise an imaging detection means 108 with single channel analysis properties, allowing energy windowing, i.e. selecting a specific energy sub-range to be selected, or may comprise an imaging detection means 108 with multiple channel analysing properties, i.e. allowing to simultaneously detect different energies or energy ranges and allowing to distinguish between these different energies or energy ranges after detection. The latter may be present for the detector element or for a number or each of a plurality of detector pixels of the detection means.

Typically energy selection capabilities may allow for chemical element specific CT imaging or for reducing beam hardening. Chemical element specific CT imaging typically may be obtained by selecting an energy window above a characteristic absorption edge, e.g. the K-edge, and an energy window below a characteristic absorption edge, e.g. the K-edge, of the element to be imaged. The use of an energy window makes it possible to scan quasi monochromatically. The latter will be described in more detail in the second aspect.

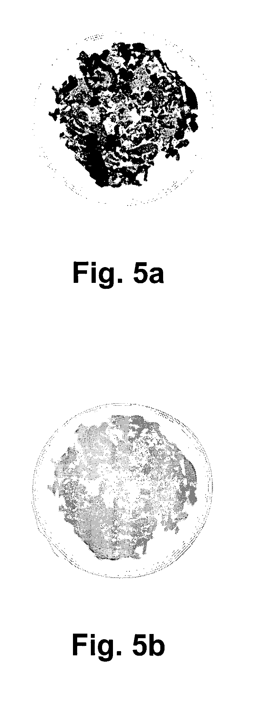

Beam hardening occurs when high energy X-ray and a low energy X-ray radiation cannot be distinguished from each other resulting in non-linearity. Typical artefacts that may occur then are cupping and streaking. Fig. 5a and Fig. 5b illustrate contrast inverted CT images of the beam hardening effect that can be reduced using a CT-system according to the present embodiment, whereby Fig. 5a illustrates an image with beam hardening reduction and Fig. 5b illustrates an image without beam hardening reduction. Whereas in prior art, the latter is typically solved by applying software linearization resulting in increased noise in the reconstruction images and typically only applicable to a single material sample, in the present embodiment, beam hardening is reduced by selecting an energy window for detection, resulting in detection of X-rays with a specific energy and in reduction of the beam hardening effects.

Applying energy selection capabilities of the image detection means 106 in the CT system typically may result advantageously in allowing CT scanning with a compact CT system, the CT scanning being similar as the high quality CT scanning obtained with a synchrotron radiation facility X-ray source.

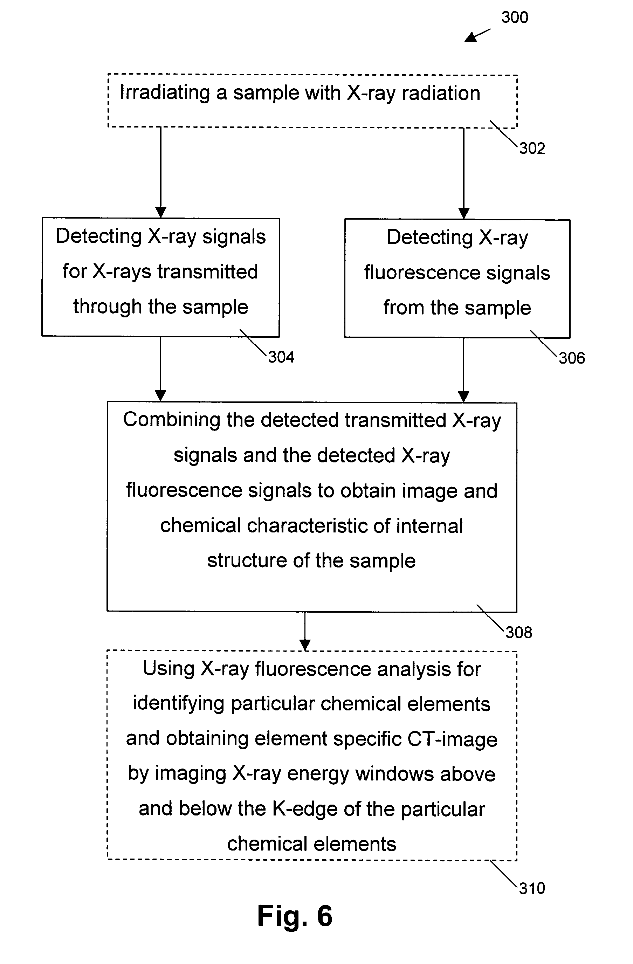

In a second aspect, the present invention relates to a method for imaging an internal structure of a sample, whereby both an image and chemical element characterisation of the internal structure of the sample is obtained. The method for obtaining such information typically may comprise the step of irradiating a sample with X-rays, nevertheless, this step does not need to be part of the method and may be performed separately. The method, according to the present aspect, comprises detecting X-ray signals transmitted through the sample, detecting X-ray fluorescence signals acquired during the detecting X-ray signals and combining the detected X-ray signals and the detected X-ray fluorescence signals to obtain a computed tomography image and chemical characteristic of the internal structure of the sample under study. A schematic overview of the different steps of an exemplary method according to the second aspect of the present invention is shown by way of illustration in Fig. 6. The method 300 for imaging an internal structure of a sample may be a method for imaging an object as well as a method for imaging a living creature. Different standard and optional steps of the method 300 as shown in Fig. 6 are now described in more detail.

Together with the standard steps of the method 300 for imaging, the method may comprise an optional step of irradiating 302 a sample with X-ray radiation. The latter may be part of the method 300 for imaging, but does not need to be part thereof. The irradiating 302 typically may be performed by irradiating the sample with X-ray radiation stemming from a conventional X-ray source such as an X-ray tube. The step may comprise irradiating the sample with non-monochromatic X-rays. The irradiating 302 may be irradiating the object with characteristic X-rays, e.g. X-rays generated through transitions of electrons between atomic orbits. Irradiating 302 typically may be performed simultaneously with the different detection steps described hereafter.

In step 304, the method 300 for imaging comprises detecting 304 X-ray signals transmitted through the sample. Detecting 304 X-ray signals transmitted through the sample typically may comprise detecting X-rays administered to the sample and attenuated thereby. Detecting X-rays typically may be performed using a standard computed tomography imaging technique, i.e. for at least one slice of the sample but preferably for a plurality of slices of the sample, detecting X-ray radiation transmitted through the sample. Detecting X-ray radiation transmitted through the sample may be performed for a plurality of different angles between the sample and the direction determined by the X-ray radiation detection beam. In other words, the sample may undergo a relative rotation with respect to the detected X-ray beam. Typically, processing of the detected X-ray signals may be performed such that a three dimensional image computed tomography of the sample is obtained. The latter typically may be performed using a standard computed tomography processing technique, as known from prior art. Such processing of the detected X-ray signals may comprise combining information about X-ray projections of the object obtained during rotation, e.g. between 0° and 360° of the sample under study. Typically the latter may use filtered back projection reconstruction techniques or iterative-based reconstruction techniques, although the invention is not limited thereto. The processing typically is performed using dedicated software, i.e. using software allowing to perform dedicated algorithms, based on neural networks, etc. The step of processing the detected X-ray signals transmitted through the sample may be part of the present step or may be part of the step of combining the detected X-ray signals and fluorescence signals into a computed tomography image and chemical information about the internal structure of the sample under study, as will be described by step 308.

In step 306, detecting 306 X-ray fluorescence signals is performed. The X-ray fluorescence signals typically are acquired during the detection of the X-ray signals transmitted through the sample. Typically the X-ray fluorescence signals may be generated using the same primary X-ray beam incident on the sample. Typically the X-ray fluorescence signals, also referred to as secondary X-ray signals may be acquired during the computed tomography scan, i.e. during detection of the X-ray signals transmitted through the sample by detecting X-ray fluorescence spectra at every scan angle at which the transmitted X-ray signals are detected. In a preferred embodiment, detecting X-ray fluorescence signals comprises collimating the X-ray fluorescence signals to be detected and/or shielding the X-ray detector during detection of fluorescence signals. The latter surprisingly allows to obtain very accurate elemental characterisation whilst also obtaining computed tomography images at the same time.

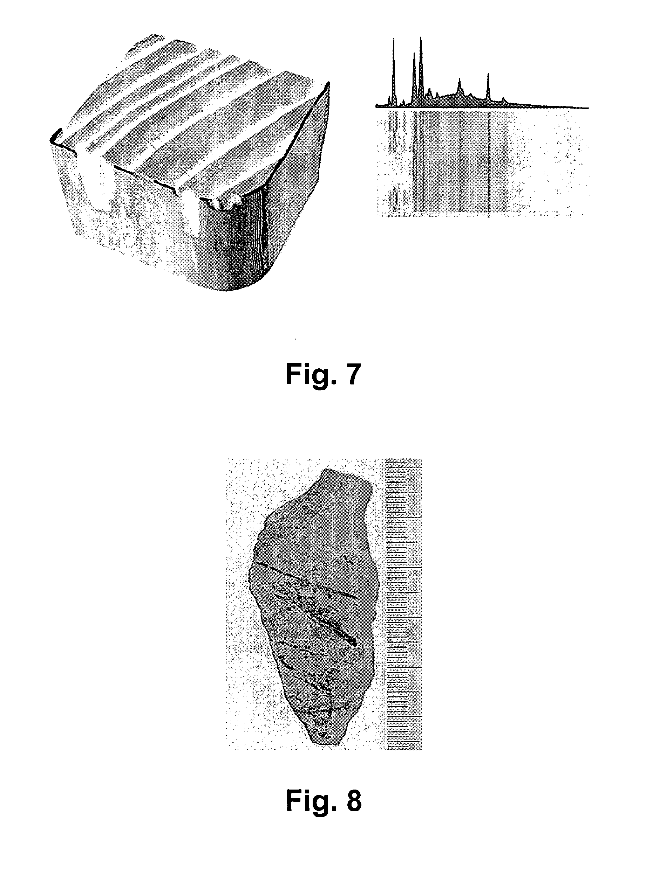

In step 308, combining 308 the detected X-ray signals and the detected X-ray fluorescence signals to obtain a computed tomography image and chemical characteristic of the internal structure of the sample under study is performed. As described above, the latter may comprise reconstructing a computed tomography image of the detected X-ray signals transmitted through the sample. Combining the detected X-ray signals and X-ray fluorescence signals also may comprise reconstructing the image and calculating the position of the chemical elements in the sample. Reconstructing and calculating the position of the chemical elements may be performed in several ways, e.g. using reconstruction techniques such as e.g. a spectrum back projection technique or an iterative spectrum matching technique, as will be described in more detail in particular embodiments. Combining the information may comprise creating a relation between the intensity of the fluorescence signals as function of the orientation of the object relative to the fluorescence detection means 108. The latter is illustrated by way of example in Fig. 7, indicating a contrast inverted image of a painted wood sample on the left hand side, an integrated X-ray fluorescence spectrum on the right hand top side and a corresponding contrast inverted spectral color map on the right hand bottom side where the vertical axis corresponds to the computed tomography angle and the vertical axis corresponds to the photon energy of the fluorescence signal. In the example shown, titanium is detected and it can be seen from the plot that the intensity of some peaks varies with the rotation angle. Typically this type of information is used for reconstructing the position of the specific detected elements. Combining the detected transmitted X-ray signals and the detected fluorescence signals typically may be performed in a computerised way, i.e. based on dedicated software. Combining the information and reconstructing the image and chemical information about the internal structure may be performed using predetermined algorithms or based on neural networks. Combining the detected signals may comprise obtaining a two dimensional map of a slice through the object or a three dimensional volume of the object with the location and/or the quantity of the atomic elements detected by the XRF detector. In other words, the present method may allow to locate and quantify the amount of chemical material of a specific chemical element present in the sample. Typically, combining the detected signals also may comprise processing the obtained results and combining them with reference detection signals in order to avoid background signals stemming from material not belonging to the sample. E.g. peaks in the X-ray fluorescence spectrum not belonging to the object, such as e.g. Ag peaks stemming from a collimator that may be used in the X-ray fluorescence detector or from the shielding material may be detected in flat field images, i.e. where the sample is absent, and can be suppressed during the chemical element reconstruction process.

The method for imaging according to the present aspect will further be described and illustrated by way of particular embodiments, the present invention not being limited thereby but only being limited by the appended claims, the embodiments only being provided by way of examples.

In a first embodiment of the second aspect, the present invention relates to a method for obtaining CT images of a sample under study with additional chemical elemental characterisation as described above, wherein combining the obtained image information and fluorescence information comprises performing a spectrum back projection technique. The spectrum back projection technique allows to calculate the elemental distribution starting from the CT data and the spectra measured during the CT acquisition. The spectrum back projection technique may use a collimated fluorescence detection signal, stemming from X-rays along a path through the central part of the sample. The spectral fluorescence intensities are back projected along the path through the central part of the sample after the CT reconstruction calculation onto the CT slices. During the back-projection process over the sample matrix, the intensity of the XRF signal is reduced according to the local attenuation values obtained from the CT scan data. A second mathematical filter is used to correct for the under-sampling in the region outside the central path, from where no corresponding X-ray fluorescence signals have reached the fluorescence detection means and to compensate for the over-sampling in the central part of the back projection matrix.

In a second embodiment of the second aspect, the present invention also relates to a method for obtaining CT images of a sample under study with additional chemical elemental characterisation as described above, but wherein combining the obtained image information and fluorescence information comprises performing iterative spectrum matching. The iterative spectrum matching technique allows to calculate the elemental distribution starting from CT data and the integrated XRF spectrum during the CT scan. The CT reconstruction data provides information about the local density multiplied with the attenuation coefficient of the material. In many cases the two parameters are coupled : higher density corresponds to higher attenuation coefficient (not true for porous materials). As an initial guess one labels the pixels in the CT slice with a chemical element according to the local densities. From this guess one simulates the XRF radiation by ray tracing towards the detector position and compares the simulated spectrum with the measured spectrum. This process is repeated for different chemical labelling situations until one reaches an optimal match between the simulated spectrum and the measured spectrum. Typically trial and error, predetermined algorithms or neural networks may be used for such a problem.

It is an advantage of the present embodiment that the reconstruction technique allows efficient elemental characterisation for reconstruction for both two dimensional CT scans and three dimensional CT scans. The iterative spectrum matching method typically may be more accurate then the spectrum back projection method but typically also requires longer calculation times. The spectrum back projection method also may be used to obtain an initial guess for the iterative spectrum matching method.

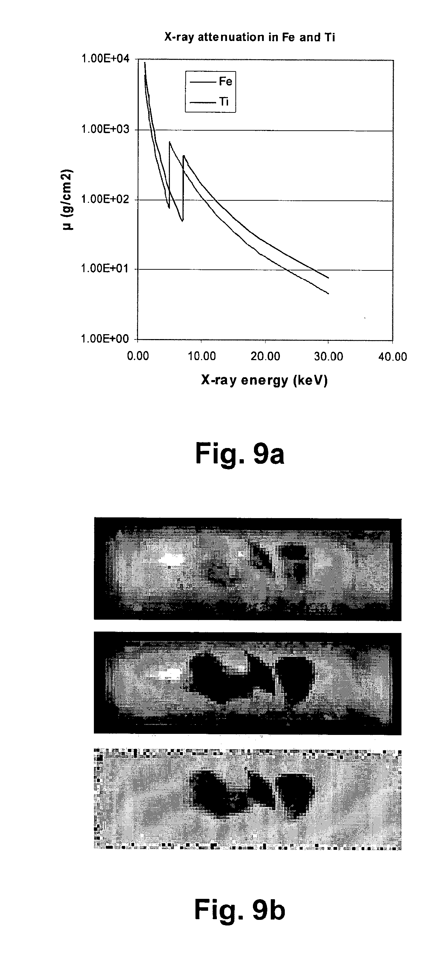

In a third embodiment of the second aspect, the present invention also relates to a method for obtaining CT images of a sample under study with additional chemical elemental characterisation as described above in general and/or in any of the first or second embodiment of the second aspect. According to the third embodiment of the second aspect, a chemical element specific CT image is obtained. The latter typically is based on detecting the X-ray radiation transmitted through the sample in an energy selective manner, whereby the energy selective manner is determined based on the obtained X-ray fluorescence detected signals. If a particular element is present in the sample determined from the x-ray fluorescence detection, a CT scan could be obtained for an energy slightly above a characteristic absorption edge, e.g. the K-edge, of that particular element and slightly below a characteristic absorption edge, e.g. the K-edge, of that particular element. The latter could e.g. be performed by tuning a monochromatic X-ray source to these energies, by tuning the detection of the X-rays transmitted by the sample to these energies or by a combination thereof. In other words, the energy window of an energy selective detection means may be set just before and just after a characteristic photo-electric absorption edge of the particular detected element and radiographies may be made for these energy windows. In the energy range between the windows all chemical elements have a decreasing attenuation as a function of X-ray energy, except the particular element under study. If e.g. the detected X-ray radiation of the two radiographic images are divided, the presence of the particular element will be revealed. The latter is illustrated by way of example for the presence of uranium in a stone in Fig. 8. The principle is further illustrated in Fig. 9a and Fig. 9b. Fig. 9a illustrates the characteristic edges of Fe and Ti. Fig. 9b illustrates on top a radiographic image for detected X-ray energies below the characteristic edge, in the middle a radiographic image for detected X-ray energies above the characteristic edge and at the bottom the division of the two radiographic images, resulting in an element-specific tomographic images being an image indicating the presence of Ti. Typically, such a technique may be performed for all projection images and a computed tomography image may be obtained, e.g. using back projection with a classical filtered back projection (FBP) reconstruction technique. The technique is also indicated in the flow diagram of the method by step 310, which is an optional step for the method of imaging, characteristic for the present embodiment.

In other words, in the present embodiment, information obtained using the XRF detector is used for scanning the sample in an element sensitive mode. The latter thus may result in chemical element specific computed tomography images. When an imaging detection means is used allowing to measure an energy spectrum of the incident X-rays for every pixel, the latter may result in simultaneously scanning of the different element-specific computed tomography images. The element sensitive computed tomography scanning could e.g. be performed with a detection means having an energy resolution of 1 keV at 10 keV.

The particular features of the third embodiment of the second aspect can e.g. also be performed without the need for first detecting transmitted X-rays, transmitted through the sample, and thus without first combining this information with detected fluorescence signals. In other words, the present invention also relates to a method wherein a sample is studied using X-ray fluorescence in order to determine which chemical elements are present and wherein, using the same X-ray radiation source and preferably also the same sample setup, element-specific computed tomography images are obtained using the method for element-specific CT imaging as described in particular steps of the third embodiment according to the second aspect, i.e. detecting transmitted X-ray radiation at energies slightly above and slightly below a characteristic absorption edge, e.g. the K-edge, of particular chemical elements which presence is determined by X-ray fluorescence.

In a third aspect, the present invention relates to a computer-implemented method for processing X-ray analysis information of a sample. The method is similar to the method for imaging an internal structure of a sample as described in the second aspect, whereby the method is focussed solely on the processing of the information rather than also comprising the actual detection steps. The method therefore comprises the steps of receiving detected X-ray data from X-rays transmitted through a sample for which information is to be processed, receiving X-ray fluorescence data detected simultaneously with the X-rays transmitted through the sample and combining the detected X-ray signals and the detected X-ray fluorescence signals to obtain a computed tomography image and chemical characteristic of the internal structure of the sample under study. Receiving data thereby typically may comprise an input or read step in the computer-implemented method, rather than the actual detection. The method typically may be used in case the data already has been acquired. The method typically may be performed on a computing device. The combining step may comprise the same features and advantages as described in the second aspect of the present invention. The method typically may be a computer-implemented method, based on predetermined algorithms, neural networks, heuristic algorithms or automated trial and error. The computer-implemented method may be performed automated and/or automatically.

In a fourth aspect, the present invention relates to a controller 130 for controlling a computed tomography system as described in the first aspect of the present invention. The controller 130 thereby typically allows to control the X-ray radiation source 102, the imaging detection means 106, the fluorescence detection means 108 and the sample stage 110 such that computed tomography images can be obtained and that simultaneously fluorescence detection can be performed. Such a controller 130 typically may allow to perform a method as described in the second aspect of the present invention on a computed tomography system as described in the first aspect of the present invention, thus assisting in obtaining a computed tomography image and chemical characterisation information about the internal structure of the sample. The controller 130 typically may comprise a synchronisation means 132 for synchronising the X-ray source, the fluorescence and imaging detector and the rotation of the sample such that computed tomography images can be obtained and such that the necessary fluorescence information is obtained at an appropriate moment during the computed tomography imaging. The X-ray fluorescence detection may for example be substantially slower than the computed tomography image acquisition. The X-ray fluorescence detection results may be acquired during a plurality of X-ray projections or different X-ray fluorescence detection results obtained during a plurality of X-ray projections may be summed or averaged. The controller 130 may include a computing device, e.g. microprocessor, for instance it may be a micro-controller. In particular, it may include a programmable controller, for instance a programmable digital logic device such as a Programmable Array Logic (PAL), a Programmable Logic Array, a Programmable Gate Array, especially a Field Programmable Gate Array (FPGA). The controller may be separate to or may be a part of the CT system as described in the first aspect according to the present invention.

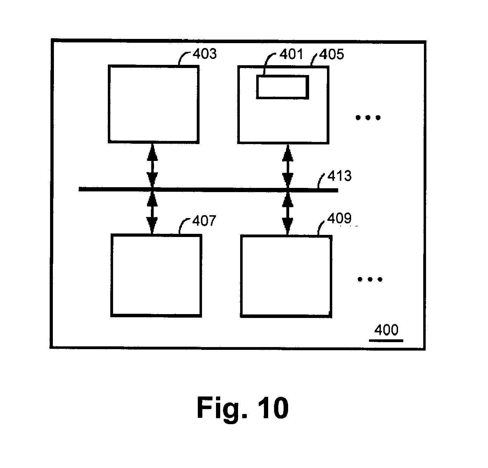

The above-described method embodiments related to computed tomography imaging and processing of X-ray analysis information of a sample as described in the present invention may be implemented in a processing system 400 such as shown in Fig. 10. Fig. 10 shows one configuration of processing system 400 that includes at least one programmable processor 403 coupled to a memory subsystem 405 that includes at least one form of memory, e.g., RAM, ROM, and so forth. It is to be noted that the processor 403 or processors may be a general purpose, or a special purpose processor, and may be for inclusion in a device, e.g. a chip that has other components that perform other functions. Thus, one or more aspects of the present invention can be implemented in digital electronic circuitry, or in computer hardware, firmware, software, or in combinations of them. The processing system may include a storage subsystem 407 that has at least one disk drive and/or CD-ROM drive and/or DVD drive. In some implementations, a display system, a keyboard, and a pointing device may be included as part of a user interface subsystem 409 to provide for a user to manually input information. Ports for inputting and outputting data also may be included. More elements such as network connections, interfaces to various devices, and so forth, may be included, but are not illustrated in Fig. 10. The various elements of the processing system 400 may be coupled in various ways, including via a bus subsystem 413 shown in Fig. 10 for simplicity as a single bus, but will be understood to those in the art to include a system of at least one bus. The memory of the memory subsystem 405 may at some time hold part or all (in either case shown as 411) of a set of instructions that when executed on the processing system 400 implement the steps of the method embodiments described herein. Thus, while a processing system 400 such as shown in Fig. 10 is prior art, a system that includes the instructions to implement aspects of the methods for obtaining computed tomography images and chemical characterisation information about the internal structure of a sample is not prior art, and therefore Fig. 10 is not labelled as prior art.

The present invention also includes a computer program product which provides the functionality of any of the methods according to the present invention when executed on a computing device. Such computer program product can be tangibly embodied in a carrier medium carrying machine-readable code for execution by a programmable processor. The present invention thus relates to a carrier medium carrying a computer program product that, when executed on computing means, provides instructions for executing any of the methods as described above. The term "carrier medium" refers to any medium that participates in providing instructions to a processor for execution. Such a medium may take many forms, including but not limited to, non-volatile media, and transmission media. Non volatile media includes, for example, optical or magnetic disks, such as a storage device which is part of mass storage. Common forms of computer readable media include, a CD-ROM, a DVD, a flexible disk or floppy disk, a tape, a memory chip or cartridge or any other medium from which a computer can read. Various forms of computer readable media may be involved in carrying one or more sequences of one or more instructions to a processor for execution. The computer program product can also be transmitted via a carrier wave in a network, such as a LAN, a WAN or the Internet. Transmission media can take the form of acoustic or light waves, such as those generated during radio wave and infrared data communications. Transmission media include coaxial cables, copper wire and fibre optics, including the wires that comprise a bus within a computer.

It is to be understood that although preferred embodiments, specific constructions and configurations, as well as materials, have been discussed herein for devices according to the present invention, various changes or modifications in form and detail may be made without departing from the scope and spirit of this invention.

## Claims

1. A computed tomography system (100, 200) for imaging a sample (104), the computed tomography system (100, 200) comprising an X-ray radiation source (102) for irradiating the sample (104) with an X-ray beam, an image detection means (106) for detecting a portion of the X-ray beam transmitted through the sample (104) as to obtain a computed tomography image of an internal structure of the sample (104) and an X-ray fluorescence detection means (108) for obtaining a chemical characteristic of said internal structure of the sample (104).

2. A computed tomography system (200) according to claim 1, wherein the X-ray fluorescence detection means (108) is adapted to detect chemical characteristics of an element composition of the sample.

3. A computed tomography system (200) according to claim 1 or 2, wherein the computed tomography system (200) comprises a collimator (202) and is adapted for detecting a collimated X-ray fluorescence signal.

4. A computed tomography system (100, 200) according to any of claims 1 to 3, wherein the computed tomography system (100, 200) is adapted for operating the image detection means (106) and the fluorescence detection means (108) simultaneously, the fluorescence detection means (108) being adapted to detect fluorescence from the sample (104) generated by the X-ray radiation beam generated by the X-ray radiation source (102).

5. A computed tomography system (200) according to any of claims 1 to 4, the computed tomography system further comprising a shielding device (204) for shielding said X-ray fluorescence detection means (108) from the X-ray radiation beam for irradiating the sample (104) and/or from the transmitted X-rays.

6. A computed tomography system (100, 200) according to any of claims 1 to 5, wherein the fluorescence detection means (108) is positioned in a plane perpendicular to a rotation axis of the computed tomography system (100, 200).

7. A computed tomography system (100, 200) according to any of claims 1 to 6, wherein the image detection means (106) is an energy selective detection means, allowing to selectively detect one or more particular X-ray energies or X-ray energy ranges.

8. A computed tomography system (100, 200) according to any of claims 1 to 7, wherein the X-ray radiation source (102) provides an X-ray beam of characteristic X-rays.

9. A method (300) for imaging an internal structure of a sample (104), the method (300) comprising
- detecting (304) X-ray signals transmitted through the sample,
- detecting (306) X-ray fluorescence signals acquired during the detecting X-ray signals, and
- combining (308) the detected X-ray signals and the detected X-ray fluorescence signals to obtain a computed tomography image and chemical characteristic of the internal structure of the sample.

10. A method (300) for imaging according to claim 9, the method furthermore comprising collimating the X-ray fluorescence signals to be detected.

11. A method (300) for imaging according to claim 9 or 10, the method furthermore comprising shielding a fluorescence detection means used for the detecting (306) of the X-ray fluorescence signals.

12. A method (300) for imaging according to any of claims 9 to 11, the sample being a non-living object, the method (300) further comprising
- irradiating (302) the sample with an X-ray beam,
wherein said X-ray beam both generates the X-ray signals transmitted through the sample and the X-ray fluorescence signals.

13. A method (300) for imaging according to any of claims 9 to 12, wherein said combining (308) comprises using a spectrum back projection technique for reconstructing a chemical characteristic of the internal structure of the sample.

14. A method (300) for imaging according to any of claims 9 to 13, wherein said combining (308) comprises using an iterative spectrum matching technique for reconstructing a chemical characteristic of the internal structure of the sample.

15. A method (300) for imaging according to any of claims 9 to 14, wherein the method furthermore comprises
- deriving at least one particular chemical element present in the sample based on said detecting X-ray fluorescence signals,
- obtaining computed tomography images for X-ray energies above and below an absorption edge of the at least one particular chemical element for absorption of X-rays, and
- combining said computed tomography images for X-ray energies above and the computed tomography image for X-ray energies below the absorption edge to obtain an element specific computed tomography image of the sample.

16. A method (300) for imaging according to any of claims 9 to 15, wherein said detecting X-ray signals transmitted through the sample comprises detecting X-ray signals for X-rays having substantially one particular X-ray energy.

17. A method (300) for imaging according to any of claims 9 to 16, wherein detecting (304) X-ray signals transmitted through the sample comprises detecting characteristic X-rays transmitted through the sample.

18. A method for processing X-ray analysis information for characterisation of a sample, the method comprising
- receiving detected X-ray data from X-rays transmitted through the sample under study,
- receiving detected X-ray fluorescence data, detected simultaneously with the X-rays transmitted through the sample, and
- combining the detected X-ray data from transmitted X-rays and the detected X-ray fluorescence data to obtain a computed tomography image and a chemical characteristic of the internal structure of the sample under study.

19. A controller for use in an X-ray characterisation device according to any of claims 1 to 8, the controller being adapted for synchronising the X-ray radiation source (102), the imaging detection means (106), the fluorescence detection means (108) and a rotation means (126) for providing a relative movement of the sample (104) with respect to the X-ray radiation source (102).

20. A computing means (400) for processing X-ray analysis information for characterisation of a sample, the computing means comprising
- an input means for receiving detected X-ray data from X-rays transmitted through the sample under study, and for receiving detected X-ray fluorescence data, detected simultaneously with the X-rays transmitted through the sample, and
- a processing means for combining the detected X-ray data from transmitted X-rays and the detected X-ray fluorescence data to obtain a computed tomography image and a chemical characteristic of the internal structure of the sample under study.

21. A computer program product adapted for, when executed on a computing device, performing a method for imaging a sample according to any of claims 9 to 17 or a method for processing X-ray analysis information according to claim 18.

22. A machine readable data storage device storing the computer program product of claim 21.

23. Transmission of the computer program product of claim 21 over a local or wide area telecommunications network.

24. Digital or analog images produced by any of the methods of claims 9 to 18.
